# EUROPEAN PATENT APPLICATION

(11) **EP 2 393 247 A1**
(43) Date of publication of application: **07.12.2011**
(21) Application number: 11168293.6
(22) Date of filing: 31.05.2011
(51) Int. Cl.: H04L 12/40

(54) **Multi-master communications in a controller area network**

(30) Priority: 01.06.2010 US 791416
(71) Applicant: Hill-Rom Services, Inc., Batesville, IN 47006 (US)
(72) Inventor: Vanderpohl, Irvin John III, Greensburg, IN Indiana 47240 (US)
(74) Representative: Findlay, Alice Rosemary

(57) **Abstract**

According to the present disclosure, a multi-master communication network for a patient support apparatus a physical layer, a data link layer, an application layer, and a network layer. The network layer includes a messaging structure allowing a plurality of network nodes to simultaneously function as a client.

## Description

The present disclosure is related to an embedded network messaging structure for a network having multiple nodes. The disclosure is more specifically related to network in which nodes may simultaneously serve as a client to selected nodes and a server to selected other nodes.

In control systems for complex devices multiple devices act independently to control the functionality of features of the device. In a patient-support device, such as a hospital bed, for example, various subsystems operate to perform specific functions within the bed. For example, a drive system controller manages the operation of the various actuators to control the position of components of the bed. An air mattress controller manages the operation of inflation devices and valve structures to control the operation of the mattress. A scale system manages the operation of the weight sensors and companion logic to determine the weight of a patient supported on the bed. In some cases, the scale system even determines characteristics of the patient depending on the changes in position of the patient on the bed. Still another user interface system monitors input devices and controls output devices to permit a user to interface with the bed to control the operation of the bed.

It is well known to use a central system manager, known as a master, to provide an interface between the sub-systems. The master controls information from the various sub-systems and shares the appropriate information with other sub-systems. In the single master configuration the master generally operates a main algorithm that prompts the various sub-systems to perform tasks or share information. All of the communication is controlled and initiated by the master.

Other systems are also known to use a masterless control system with the various sub-systems communicating directly with one another on an as-needed basis. In a materless system, the communications overhead is reduced because each piece of information can be shared with a single message, directed to the appropriate recipient. In contrast, a master based system requires first, message requesting information from a sub-system and a return message from the sub-system to the master. If the message information is to be used by another sub-system, then the master must send the information to the second sub-system, requiring three messages to share the information. Thus, the masterless system requires fewer communications and, as a result, less communication bandwidth.

Masterless communication, while requiring less communication bandwidth, does present challenges. The first challenge is the issue of when a first sub-system is to send a message. Messages may be sent at particular time intervals to provide regular status updates to other sub-systems. Messages may also be sent on an event-driven basis with changes in data causing the data to be updated.

The present application discloses one or more of the following features alone or in any combination.

According to the present disclosure, a multi-master communication network for a patient support apparatus includes a physical layer, a data link layer, an application layer, and a network layer. The network layer includes a messaging structure allowing a plurality of network nodes to simultaneously function as a client.

The client node identification for a client request may be embedded in a network message identification such that the message identification is modified to be unique to a single client and server combination. The node identification for a server response be embedded in a network message identification such that the message identification is modified to be unique to a single client and server combination.

A client message may be by a client node to request data from a particular server nods. The particular server from which the data is requested may respond directly to the node sending the client request message by responding with a specific directed to the node which sent the client request message.

In some embodiments, a user interface node makes a client request directed to a scale node which makes a server response. In some embodiments, an air mattress node functions as a server node.

The network may further include a gateway node in communication with an external interface device. The gateway node may make a client request to another node on the network in response to a query from the external interface device. In some embodiments, the external interface device is a nurse communications workstation.

The network layer may be configured such that any node connected to the physical layer may simultaneously communicate as a client, a server, and a peer. A single node on the network may simultaneously respond to client requests from a plurality of nodes. A server response may comprise a plurality of messages, with each message including a portion of the data requested by the client node.

The invention will now be further described by way of example with reference to the accompanying drawings, in which:

Fig. 1 is diagram of a first embodiment of a network for a patient support apparatus;

Fig. 2 is a diagrammatic representation of the identification of a client request and a server response between two nodes on the network of Fig. 1;

Fig. 3 is a diagrammatic representation of the numerical identifiers used in client server communications between the nodes of the network of Fig. 1;

Fig. 4 is a diagrammatic representation of another embodiment of a network for a patient support apparatus; and

Fig. 5 is a diagrammatic representation of the network of Fig, 4 further including an additional node and an external interface.

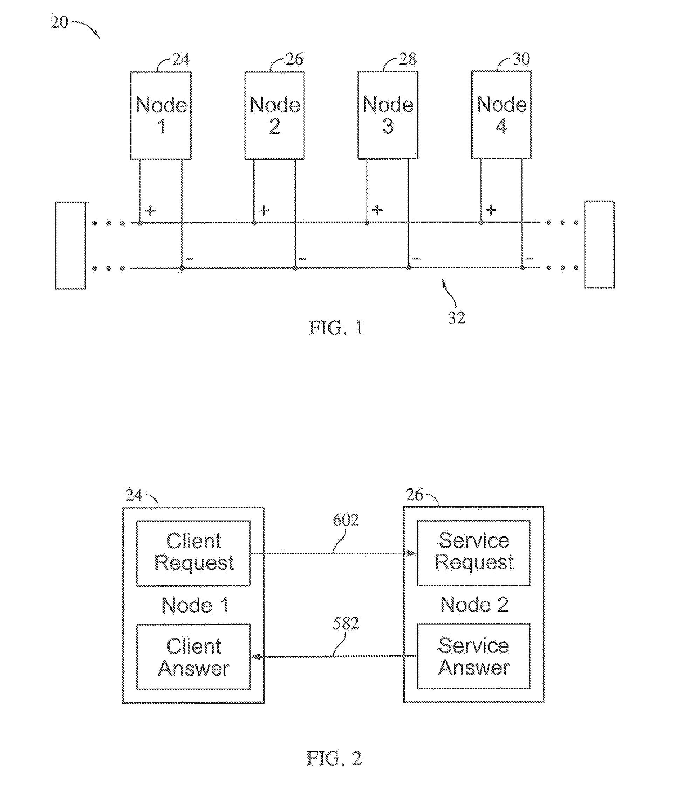

A multi-node communication network 20 for a medical device 22 is shown diagrammatically in Fig. 1 with a number of nodes 24, 26, 28, and 30 connected to a twisted pair bus 32. In one illustrative embodiment, Controller Area Network (CAN) specification 2.0B as specified in ISO 11898 is used for network 20. Illustratively, network 20 includes three of the seven network layers defined in the ISO model: the physical layer, the data link layer and the application layer. The physical layer includes the twisted pair bus 32. The physical layer also includes hardware present on each of nodes 24, 26, 28, and 30. The hardware includes a transceiver for communicating with the bus 32 and a microcontroller with a built-in CAN controller. In the illlustrative embodiment, the transceiver is a TJA1054 CAN transceiver manufactured by Philips Electronics. The illustrative microcontroller is a T89C51CC01 microcontroller manufactured by Amtel, The microcontroller is connected to a crystal oscillator, such as a 20 MHz crystal.

The application layer complies with the CANopen specification. CANopen is an open standard including communication interface and protocol software, an object dictionary and an application program interface. The communication interface and protocol software provides a means by which a CANopen device can transmit and receive messages over network 20. The object dictionary is a collection of an the system variable information communicated over network 20. The application program interface controls how the application software interacts with the various network parameters.

As described in U.S. Pat No. 7,506,390, CANopen includes a process data object (PDO) protocol for updating the object dictionary of a node with new information from other nodes on the network. This updating may be event driven or may be time interval based. As such, when two messages access the network simultaneously, the network messages are prioritized with a higher priority message getting access to the network before a lower priority message. As the data shared across the network increases, the capacity of the network is increasingly consumed.

Another data protocol used in a CANopen implementation is the service data object (SDO) protocol which allows client-server relationships to be established between nodes on the network 20. This protocol includes two participants in any SDO message exchange, the client and the server. The message is the master of the SDO communication and is only enabled by a client enabled node. Once initiated, the client message is received by a single slave node as a server message. The server then responds to the client message with an appropriate action or response.

The SDO messages allow a peer-to-peer communication relationship to be established between an SDO client and an SDO server. As defined in the CANopen specification, SDO communication allows for upt to 127 nodes to communicate via SDO. The message identifiers (ID) used for SDO communication within the CANopen specification is available on up to 127 nodes and follows the following format:

| | |
|---|---|
| SDO(tx). | 0x581 - -0x5FF |
| SDO(rx): | 0x601 - 0x67F |

The rx and tx specifies are referenced from the perspective of the server device. To generate the actual object ID's. the node ID is added to the base SDO message ID's. For example, the base SDO message ID's 0x580 and 0x600 may be used with a particular server node. From a server node with a node identifier of 2, an SDO download would the format of:

| | |
|---|---|
| SDO Client Message ID (request data): | 0x602 |
| SDO Server Message ID (data reply): | 0x582 |

Because the CANopen protocol only has an SDO format than only the server information, no client information is included in the message ID, Because of this limitation, only a single client may access a particular server node at a given time. Generally, only one node on the network is designated as a master.

As will be discussed below, in some situations it is advantageous for multiple nodes, operating as clients, to simultaneously access a particular server node to update object data. By modifying the message ID numbering format, a unique message between each client node and each server node allows each node pair to establish a client server communication relationship, In this way, each node may operate as both a client and a server depending the relationship between the node and any other given node.

Because the SDO ID format of CANopen includes three hexadecimal digits; the message ID, remaining CANopen compliant, limits the number of client, nodes to 8 with a tolal of 15 nodes that may have server functionality. In the illustrative embodiment, every SDO client initiated ID includes 6 as the first, digit The second digit in the object ID for the client initiated request is defined as the node ID of the client node initiating the message; minus one, Thus, node 0 cannot serve a client node. The third digit in the object ID of a client initiated message is the node ID of the targeted SDO server, in hexadecinal.

The SDO server response to a client initiated request has an object ID identified, with a first digit of 5. The second digit in the server response is the node ID of the target client plus 7. The third digit in the three digit message ID is the node ID of the server. Thus, the node ID's of the SDO client capable nodes is from 1-8. The node ID's of the non-SDO client capable nodes is 9-F.

Referring now to Fig. 2, in a particular message transaction, node 24, having a node ID of 1, transmits a client message requesting data to node 26, having a node ID or 2. The client request message ID is 602, with the first digit of six indicating that the message is a client request, the second digit 0 being the node value of the node minus 1, and the third digit 2 being the identification of the target server. The response message ID from node 26 has an object ID of 582 with the first digit 5 indicating that the message is a server response, the second digit 8 being the node ID of the target client plus 7, and the third digit 2 indicating the server node ID.

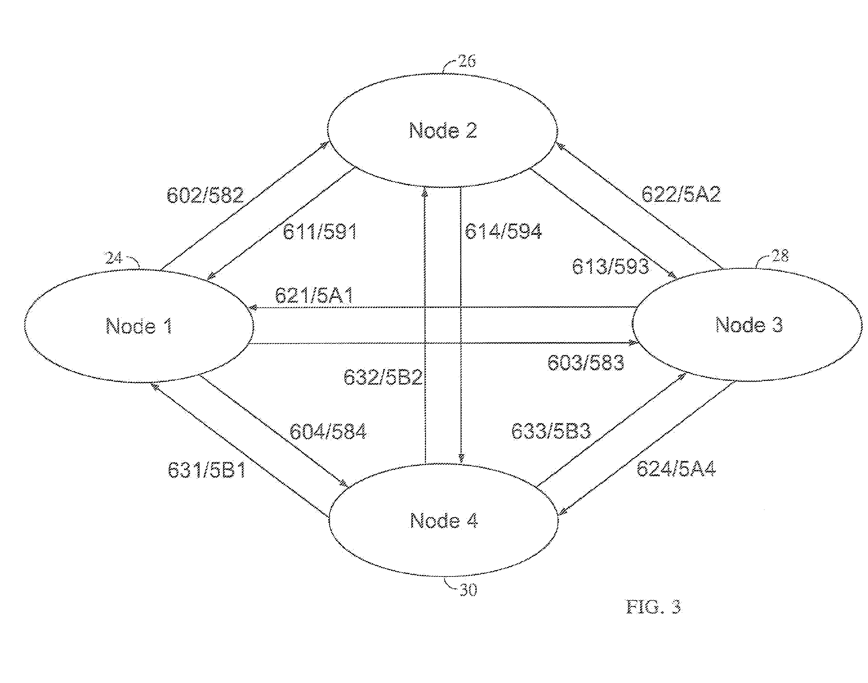

Referring now to Fig. 3, the object ID of various client-server communications is shown. In the four node system of the illustrative embodiment each node may operate as both a client and a to each other node. Each arrow in Fig. 3 represents a client request pointing from a client node to a server node. The text next to each arrow represents the three digit object ID of the client request followed by the three digit object ID of the server response. For example, the object ID's of the client request and server response described with regard to Fig. 2 is shown next to the arrow pointing from node 24 to node 26 in Fig. 3.

The use of the SDO protocol over multiple nodes reduces the network bandwidth required for transferring large amounts of data on an event-driven or time interval driven on a push basis as requited in the data push approach of the PDO protocol within CANopen, SDO permits a node 24, 26, 28, 30 on the network 20 to request data updates only when refreshed data is required by the requesting client node. The requesting node then the object dictionary of node with the information provided by the respective server node. The data is shared only between the nodes that make up the particular communication. Thus, each node 24, 26, 28, and 30 maintains an independent object dictionary.

In the illustrative embodiment, each of the nodes 24, 26, 28, and 30 may also output PDO updates on an event driven or timed interval basis to provide updates to the other nodes. As such, each node may operate as a client in some communications, a server in some communications, and a peer in some communications. Thus, while there is no master node for the network 20, at least 8 nodes may operate as a master for specific data transfers from other nodes on the network 20.

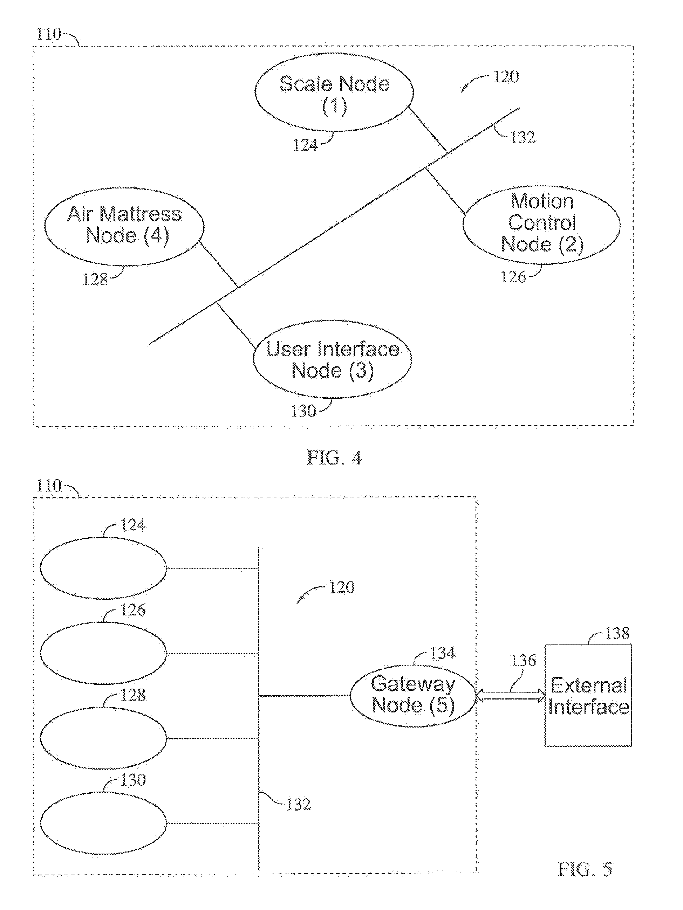

In an illustrative embodiment shown in Fig. 4, a patient support apparatus 110 includes a network 120 including a scale node 124, a motion control node 126, an air mattress node 128, and a user interface node 130. The nodes 124, 126, 128 and 130 are connected to a bus 132. Illustratively, each of these nodes 124, 126, 128 and 130 may be configured as an SDO client enabled node. Each node 124, 126, 118, and 130 may provide regular updates of status over the network 120 with the data available to other nodes as a PDO. For example, the scale node 124 issues a calculated weight value as a PDO at regular time intervals. The motion, control node 126 issues a PDO message identifying the position of various members of the patient support apapratus 110 at regular time intervals. The user interface module 130 issues a PDO message at regular intervals indicating the status of various user inputs.

The user interface node 130 also issues SDO requests to the other nodes 124, 126, and 128 to gather information when a user queries service information. For example, a user may wish to view the history of the position of a head section of the patient support apparatus 110. Rather than maintaining that historical information resident in the object dictionary of the user interface node 130, the user interface node 130 issues an SDO request for the pertinent data to the motion control node 126 when the user makes the request for the history. The motion control node 126 then issues the historical data as an SDO response directed to the user interface node 130. Because of the SDO communication, bandwidth required on the network 120 to transfer the data is only consumed when the user requests the data. Once the data is received, application layer software resident on the user interlace node 130 formats the data and generates a display image showing the data.

In another illustrative example, the user interface module 130 issues an SDO client request to the scale node 124 when a user requests a view of the history of the weight detected by the scale node 124. The scale node 124 responds with a server response SDO providing the requested data to update the object dictionary of the user interface node 130. In some instances, the server response SDO may sent through multiple messages if the data requested exceeds the capacity of a single response message.

The patient support apparatus 110 may also include a gateway node 134 which is connected to the bus 132 of network 120 to operate as a node on the network 120 as shown in Fig. 5. The gateway node 134 is also connected to an external interface 138 by an Ethernet connection 136, In some embodiments, the connection. 136 may be embodied as a wireless connection or serial connection other than Ethernet. The external interface 138 may request data from the support apparatus 110 through the gateway node 134. The gateway node 134 may then pull information from the other nodes 124, 126, 128 and 130 and share the information with the external interface 138. In the iliustrative embodiment, the external interface 138 is a hospital information system such as the NaviCare® Nurse Call system from Hill-Rom, Inc. of Batesville, Indiana.

Utilizing the SDO protocol of CAMopen, the multi-master approach disclosed herein provites the benefit of reducing the bandwidth required as compared utilizing a PDO approach for large amounts of data, distributes the processing power required to the functionai nodes, and avoids the bandwidth consumption that results from utilizing other protocols. For the Carrier Sense Multiple Access with Collision Detection (CSMA/CD) methodology used by Ethernet the network when a collision is detected. During the jamming period, no communication may take place on the network. The collision avoidance method used by CANopen resolves collisions by priority so that the higher priority message gets access to the network. Thus, collisions do not consume bandwidth as occurs with Ethernet.

In addition, because the disclosed methodology includes ability to have multiple nodes make client requests, the network does not have to follow a token ring methodology, Thus, rather than waiting for permission to access the network, each node accesses the network to pull information and any potential collisions are resolved based on priority.

Although certain, illustrative embodiments have been described in detail above, variations and modilications exist.

## Claims

1. A multi-master communication network for a patient support apparatus, the network comprising:
a physical layer,
a data link layer,
an application layer, and
a network layer including a messaging structure allowing a plurality of network nodes to simultaneously function as a client.

2. The network of claim 1, wherein the client node identication for a client is embedded in a network message identification such that the message is modified to be unique to a single client and server combination.

3. The network of either claim 1. or claim 2, the node identification for a server response is embedded in a network message identification such that the message is modified to be unique to a single client, and server combination.

4. The network of any preceding claim, wherein a client message is formed by a client node to request data from a particular server node.

5. The network of claim 4, the particular server from which the data is requested responds directly to the node sending the client, request message by responding with a specific message directed to the node which sent the client request message.

6. The network of any preceding claim, further comprising a gateway node in communication with an external interface device, the gateway node making a client request to another node on the network in response to a query from the external interface device.

7. The network of claim 6, the external interface device is a nurse communications workstation.

8. The network of claim 7, wherein the network layer is configured such that any node connected to the physical layer may simultaneously communicate as a client, a server, and a peer.

9. The network of claim 8, wherein a single node on the network may simutaneously respond to client requests from a plurality of other nodes.

10. The network of claim 9, wherein a server response may comprise a plurality of messages, with each message including a portion of the data requested by the client node.

11. The network of either claim 5 or claim 10, wherein a user interface node makes a client request directed to a scale node which makes a server response.

12. The network of claim 11, wherein an air mattress node functions as a server node.
